(19) **Europäisches Patentamt**
**European Patent Office**
**Office européen des brevets**

(11) **EP 3 974 288 A1**

(12) **EUROPEAN PATENT APPLICATION**

(43) Date of publication:
**30.03.2022 Bulletin 2022/13**

(21) Application number: **21198557.7**

(22) Date of filing: **23.09.2021**

(51) International Patent Classification (IPC):
**B62D 5/04** *(2006.01)* **B62D 6/00** *(2006.01)*

(52) Cooperative Patent Classification (CPC):
**B62D 6/008; B62D 5/049; B62D 6/02**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2020 JP 2020161923**

(71) Applicant: **JTEKT CORPORATION
Aichi-ken, 448-8652 (JP)**

(72) Inventors:
- **KAKIMOTO, Yusuke
  Kariya-shi, Aichi-ken, 448-8652 (JP)**
- **KODERA, Takashi
  Kariya-shi, Aichi-ken, 448-8652 (JP)**

(74) Representative: **Winter, Brandl - Partnerschaft
mbB
Alois-Steinecker-Straße 22
85354 Freising (DE)**

(54) **STEERING CONTROL DEVICE**

(57) A steering control device (1) includes a target torque generating unit (72) configured to generate a target torque which is a target value of a motor torque. The target torque generating unit (72) includes an axial component calculating unit (92). The axial component calculating unit (92) includes a first calculation system (101) configured to calculate a vehicle-speed-based axial force, a second calculation system (102) configured to calculate an other-state-quantity-based axial force, and an output switching unit (103). The output switching unit (103) is configured to output the vehicle-speed-based axial force as the axial component by validating the first calculation system (101) when a state of the vehicle speed is normal and to output the other-state-quantity-based axial force as the axial component by validating the second calculation system (102) when the state of the vehicle speed is abnormal.

FIG. 3

EP 3 974 288 A1

**Description**

BACKGROUND OF THE INVENTION

1. Field of the Invention

The invention relates to a steering control device.

2. Description of Related Art

A steer-by-wire steering system in which a power transmission path between a steering unit that is connected to a steering wheel and a turning unit that turns turning wheels is cut off is known. In such a type of steering system, a road-surface reaction force or the like applied to the turning wheels is not mechanically transmitted to the steering wheel. Therefore, a steering control device that controls such a type of steering system calculates a target value of a steering reaction which is applied to the steering wheel in consideration of a road-surface reaction force or the like.

For example, a steering control device described in WO 2013/061567 calculates a plurality of types of calculational axial forces corresponding to an axial force acting on a turning shaft connected to turning wheels based on various state quantities with attention paid to the axial force. The steering control device calculates a target steering reaction force based on a distributed axial force which is obtained by summing the plurality of types of calculational axial forces at distribution proportions which are individually set. In the publication, an angle axial force based on a steering angle of a steering wheel or a vehicle speed and a current axial force based on a drive current of a turning motor that generates a turning force are described as examples of the plurality of types of calculational axial forces.

SUMMARY OF THE INVENTION

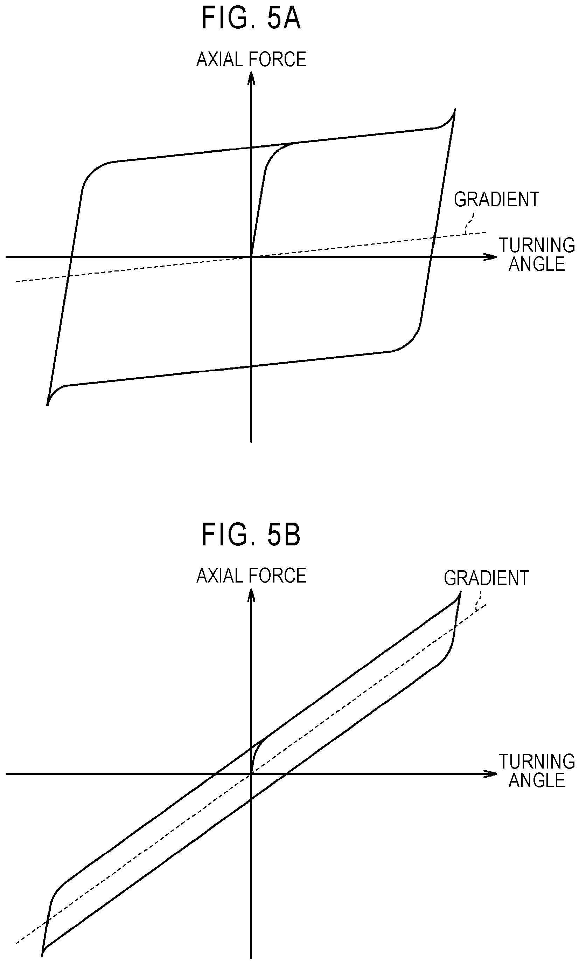

A relationship between a turning angle of turning wheels and an axial force which is actually applied to a turning shaft is illustrated, for example, as a graph illustrated in FIGS. 5A and 5B, and changes according to a vehicle speed. That is, as illustrated in FIG. 5A, when the vehicle speed represents a state in which a vehicle is stopped, the relationship represents that a gradient which is a rate of change of the axial force with respect to the turning angle is small and a hysteresis component is large. On the other hand, as illustrated in FIG. 5B, when the vehicle speed represents a state in which the vehicle is traveling in a middle or high speed area, the relationship represents that the gradient of the axial force is large and the hysteresis component is small. The hysteresis component mainly indicates friction between the turning wheels and a road surface.

Accordingly, for example, when an angle axial force is calculated as described in WO 2013/061567, an appropriate angle axial force cannot be calculated using only a steering angle or a value associated therewith and the vehicle speed needs to be considered in addition to the steering angle. Accordingly, for example, when the detected vehicle speed is an erroneous value such as when an abnormality occurs in a sensor that detects the vehicle speed, the angle axial force may become different from an axial force which is actually applied. As a result, a target steering reaction force which is calculated based on the angle axial force may become different from an appropriate value based on the axial force which is actually applied to the turning shaft.

This problem is not limited to the case in which the angle axial force is calculated, but may be similarly caused, for example, when an axial force based on the vehicle speed such as a vehicle state quantity axial force indicated by a lateral force acting in a lateral direction of the vehicle is calculated. This problem is not limited to a case in which a steer-by-wire steering system that applies a motor torque as a steering reaction force is controlled. For example, as described in Japanese Unexamined Patent Application Publication No. 2016-144974, this problem can be similarly caused when a steering control device that controls an electric power steering system that applies a motor torque as an assist force determines a target value of the assistor force based on an axial force acting on the turning shaft.

The invention provides a steering control device that can prevent a target torque from becoming different from an appropriate value.

According to an aspect of the invention, there is provided a steering control device configured to control a steering system that changes a steering torque which is required for steering of a steering wheel using a motor torque which is applied from a motor. The steering control device includes a target torque generating unit configured to generate a target torque which is a target value of the motor torque and a control signal generating unit configured to generate a control signal for controlling the motor such that the motor torque based on the target torque is generated. The target torque generating unit includes an axial component calculating unit configured to calculate an axial component corresponding to an axial force acting on a turning shaft to which turning wheels are connected and a target torque calculating unit configured to calculate the target torque based on the axial component. The axial component calculating unit includes a first calculation system configured to calculate a vehicle-speed-based axial force based on a state quantity including a vehicle speed, a second calculation system configured to calculate an other-state-quantity-based axial force based on a state quantity other than the vehicle speed, and an output switching unit configured to switch a valid calculation system to the first calculation system or the second calculation system. The output switching unit is configured to output the vehicle-speed-based axial force as the axial component by validating the first calculation system when a state of the vehicle speed is normal and to output the other-state-quantity-based axial force as the axial component by validating the second calculation system when the state of the vehicle speed is abnormal.

With this configuration, when the state of the vehicle speed is abnormal, the other-state-quantity-based axial force which is not based on the vehicle speed is output as an axial component and a target torque is calculated based on the axial component. Accordingly, it is possible to prevent the target torque from becoming different from an appropriate value based on the axial force acting on the turning shaft.

In the aspect, the axial component calculating unit may be configured to slowly change a value of the axial component from a value of the vehicle-speed-based axial force to a value of the other-state-quantity-based axial force when the valid calculation system is switched from the first calculation system to the second calculation system.

With this configuration, when the state of the vehicle speed is abnormal, the value of the axial component changes slowly from the value of the vehicle-speed-based axial force to the value of the other-state-quantity-based axial force. Accordingly, in comparison with a case in which the value of the axial component changes immediately from the value of the vehicle-speed-based axial force to the value of the other-state-quantity-based axial force when the state of the vehicle speed has become abnormal, it is possible to curb a rapid change of the axial component. As a result, it is possible to curb a rapid change of the target torque and to prevent a feeling of steering from becoming worse.

In the aspect, the vehicle-speed-based axial force may be a first distributed axial force which is calculated based on a first axial force group including a plurality of types of calculational axial forces, the other-state-quantity-based axial force may be a second distributed axial force which is calculated based on a second axial force group including a plurality of types of calculational axial forces, the first axial force group may include at least one of an angle axial force which is calculated based on the vehicle speed and which does not include road surface information and a vehicle state quantity axial force which is calculated based on the vehicle speed and which includes road surface information which is able to be transmitted through a change of behavior in a lateral direction of a vehicle out of the road surface information, and the second axial force group may not include a calculational axial force which is calculated based on the vehicle speed and may include a plurality of types of road-surface axial forces which is calculated based on a state quantity other than the vehicle speed and which includes the road surface information.

In the aspect, the vehicle-speed-based axial force may be an angle axial force which is calculated based on the vehicle speed and which does not include road surface information or a vehicle state quantity axial force which is calculated based on the vehicle speed and which includes road surface information which is able to be transmitted through a change of behavior in a lateral direction of a vehicle out of the road surface information, and the other-state-quantity-based axial force may be a single road-surface axial force which is calculated based on a state quantity other than the vehicle speed and which includes the road surface information.

In the aspect, the steering system may have a structure in which a power transmission path between a steering unit to which the steering wheel is connected and a turning unit which turns the turning wheels is cut off, the motor may be a steering-side motor that applies the motor torque as a steering reaction force against steering input to the steering unit, and the target torque generating unit may be configured to generate a target reaction torque which is a target value of the steering reaction force as the target torque.

According to the aspect, it is possible to prevent a target torque from becoming different from an appropriate value.


BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram schematically illustrating a configuration of a steering system according to a first embodiment;
FIG. 2 is a block diagram illustrating a steering control device according to the first embodiment;
FIG. 3 is a block diagram illustrating a target reaction torque generating unit according to the first embodiment;
FIG. 4 is a block diagram illustrating a target reaction torque generating unit according to a second embodiment;
FIG. 5A is a graph illustrating a relationship between an axial force and a turning angle at a vehicle speed indicating a stopped state; and
FIG. 5B is a graph illustrating a relationship between an axial force and a turning angle at a vehicle speed indicating a state in which a vehicle is traveling at a middle/high speed.

DETAILED DESCRIPTION OF EMBODIMENTS

First embodiment

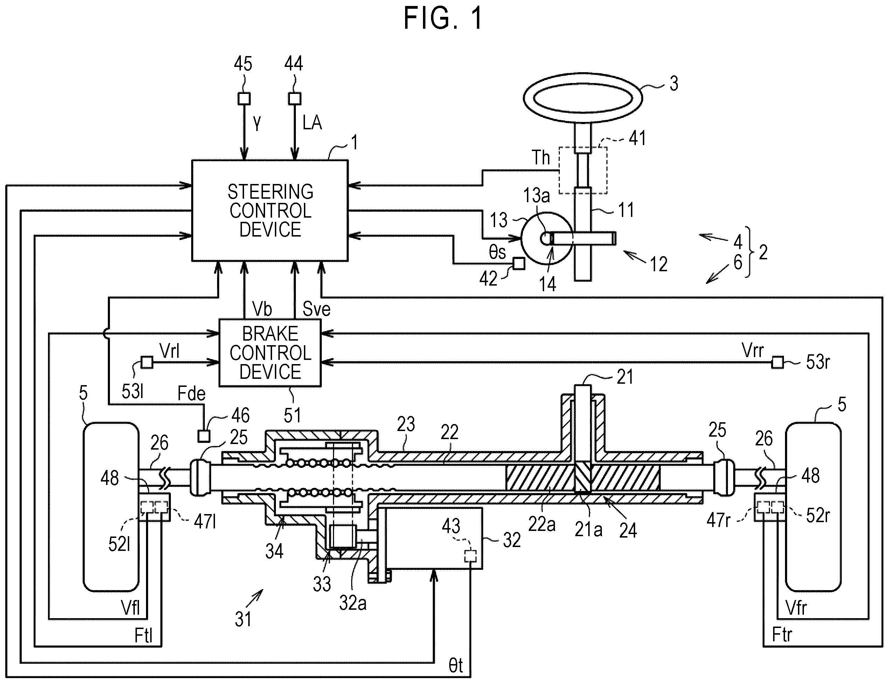

Hereinafter, a steering control device according to a first embodiment will be described with reference to the accompanying drawings. As illustrated in FIG. 1, a steering system 2 which is controlled by a steering control device 1 is configured as a steer-by-wire steering system. The steering system 2 includes a steering unit 4 that is steered by a driver using a steering wheel 3 and a turning unit 6 that turns turning wheels 5 according to the driver's steering of the steering unit 4.

The steering unit 4 includes a steering shaft 11 to which the steering wheel 3 is connected and a steering-side actuator 12 that applies a steering reaction force which is a force against steering of the steering wheel 3.

The steering-side actuator 12 includes a steering-side motor 13 and a steering-side reduction gear 14. For example, a three-phase surface permanent magnet synchronous motor is employed as the steering-side motor 13. For example, a worm-and-wheel mechanism is employed as the steering-side reduction gear 14. The steering-side motor 13 is connected to the steering shaft 11 via the steering-side reduction gear 14. Accordingly, a motor torque of the steering-side motor 13 is applied as a steering reaction force to the steering wheel 3 via the steering shaft 11.

The turning unit 6 includes a pinion shaft 21, a rack shaft 22 that is a turning shaft connected to the pinion shaft 21, a rack housing 23 that accommodates the rack shaft 22 such that it can reciprocate, and a rack and pinion mechanism 24 that includes the pinion shaft 21 and the rack shaft 22. The pinion shaft 21 and the rack shaft 22 are arranged at a predetermined crossing angle in the rack housing 23. The rack and pinion mechanism 24 has a configuration in which pinion teeth 21a formed in the pinion shaft 21 and rack teeth 22a formed in the rack shaft 22 engage with each other. Accordingly, the pinion shaft 21 rotates with reciprocation of the rack shaft 22. Tie rods 26 are connected to both ends of the rack shaft 22 via ball joints 25. The tips of the tie rods 26 are connected to knuckles (not illustrated) to which the turning wheels 5 are assembled.

The turning unit 6 includes a turning-side actuator 31 that applies a turning force which is a force for turning the turning wheels 5. The turning-side actuator 31 includes a turning-side motor 32, a transmission mechanism 33, and a conversion mechanism 34. For example, a three-phase surface permanent magnet synchronous motor is employed as the turning-side motor 32. For example, a belt mechanism is employed as the transmission mechanism 33. For example, a ball screw mechanism is employed as the conversion mechanism 34. A motor torque of the turning-side motor 32 is transmitted to the conversion mechanism 34 via the transmission mechanism 33. The conversion mechanism 34 converts the transmitted torque to a translational motion of the rack shaft 22. Accordingly, the turning-side actuator 31 applies a turning force to the turning unit 6.

In the steering system 2 having the aforementioned configuration, a turning force is applied from the turning-side actuator 31 according a driver's steering operation. Accordingly, the rack shaft 22 is made to reciprocate and a turning angle of the turning wheels 5 is changed. At this time, a steering reaction force against the driver's steering is applied to the steering wheel 3 from the steering-side actuator 12. That is, in the steering system 2, a steering torque Th which is required for steering of the steering wheel 3 is changed according to the motor torque which is applied as a steering reaction force from the steering-side motor 13.

An electrical configuration according to this embodiment will be described below. The steering control device 1 is connected to the steering-side motor 13 and the turning-side motor 32 and operates the steering-side motor 13 and the turning-side motor 32.

The steering control device 1 can be configured as a processing circuit including (1) one or more processors that operate in accordance with a computer program (software), (2) one or more dedicated hardware circuits such as an application-specific integrated circuit (ASIC) that performs at least some of various processes, or (3) a combination thereof. The processor includes a central processing unit (CPU) and memories such as a RAM and a ROM, and the memories store program codes or commands configured to cause the CPU to perform processing. Memories, that is, non-transitory computer-readable media, include all available media that can be accessed by a general-purpose or dedicated computer. Various types of control are performed by the steering control device 1 by causing the CPU to execute a program stored in the memories in each of predetermined operation cycles.

Results of detection from various sensors are input to the steering control device 1. The various sensors include, for example, a torque sensor 41, a steering-side rotation angle sensor 42, a turning-side rotation angle sensor 43, a lateral acceleration sensor 44, a yaw rate sensor 45, an axial force sensor 46, a front-left tire force sensor 47l, and a front-right tire force sensor 47r.

The torque sensor 41 detects a steering torque Th which is applied to the steering shaft 11. For example, the steering torque Th is detected as a positive value when the steering wheel is steered to the right and is detected as a negative value when the steering wheel is steered to the left. The steering-side rotation angle sensor 42 detects a rotation angle $\theta s$ of a rotation shaft 13a of the steering-side motor 13 as a relative angle in a range of 360°. The turning-side rotation angle sensor 43 detects a rotation angle $\theta t$ of a rotation shaft 32a of the turning-side motor 32 as a relative angle. The lateral acceleration sensor 44 detects a lateral acceleration LA of the vehicle. The yaw rate sensor 45 detects a yaw rate $\gamma$ of the vehicle.

The axial force sensor 46 detects an axial force detection value Fde based on an axial force acting on the rack shaft 22. For example, a sensor that detects an axial force based on a change in pressure corresponding to a stroke of the rack shaft 22 can be employed as the axial force sensor 46. The dimension of the axial force detection value Fde is measured in newtons (N). The front-left tire force sensor 471 and the front-right tire force sensor 47r are provided in a hub unit 48 that rotatably supports the turning wheels 5 via a drive shaft which is not illustrated. The front-left tire force sensor 471 detects a tire force Ftl which acts on the left turning wheel 5. The front-right tire force sensor 47r detects a tire force Ftr which acts on the right turning wheel 5. The tire forces Ftl and Ftr are values based on at least one of a load in a vehicle length direction (an x direction), a load in a vehicle width direction (a y direction), a load in a vehicle height direction (a z direction), a moment around an x axis, a moment around a y axis, and a moment around a z axis. The dimensions of the tire forces Ftl and Ftr are measured in newtons (N).

The steering control device 1 is communicatively connected to a brake control device 51 which is provided outside of the steering control device 1. The brake control device 51 is a device that operates a brake device which is not illustrated. The brake control device 51 calculates a vehicle speed Vb of a vehicle body at the time of operating the brake device. Specifically, a front-left wheel sensor 521, a front-right wheel sensor 52r, a rear-left wheel sensor 531, and a rear-right wheel sensor 53r are connected to the brake control device 51. The front-left wheel sensor 521 and the front-right wheel sensor 52r are provided in a hub unit 48. The front-left wheel sensor 521 detects a vehicle wheel speed Vfl of the left turning wheel 5, the front-right wheel sensor 52r detects a vehicle wheel speed Vfr of the right turning wheel 5, the rear-left wheel sensor 531 detects a vehicle wheel speed Vrl of a rear-left wheel which is not illustrated, and the rear-right wheel sensor 53r detects a vehicle wheel speed Vrr of a rear-right wheel which is not illustrated. For example, the brake control device 51 calculates an average of the vehicle wheel speeds Vfl, Vfr, Vrl, and Vrr as the vehicle speed Vb. The calculated vehicle speed Vb is output to the steering control device 1.

The brake control device 51 determines whether a state of the detected vehicle speed Vb is normal. For example, when the vehicle wheel speeds Vfl, Vfr, Vrl, and Vrr output from the front-left wheel sensor 521, the front-right wheel sensor 52r, the rear-left wheel sensor 531, and the rear-right wheel sensor 53r are unobtainable values or when a change from a previous value is greater than a preset threshold value, the brake control device 51 determines that the state of the vehicle speed Vb is abnormal. For example, when at least one of drive voltages which are supplied to the front-left wheel sensor 521, the front-right wheel sensor 52r, the rear-left wheel sensor 531, and the rear-right wheel sensor 53r decreases, the brake control device 51 determines that the state of the vehicle speed Vb is abnormal. The brake control device 51 generates a vehicle speed state signal Sve indicating the result of determination of the state of the vehicle speed Vb. The generated vehicle speed state signal Sve is output to the steering control device 1.

The steering control device 1 controls operations of the steering-side motor 13 and the turning-side motor 32 based on the state quantities input from the sensors and the brake control device 51. The configuration of the steering control device 1 will be described below in more detail.

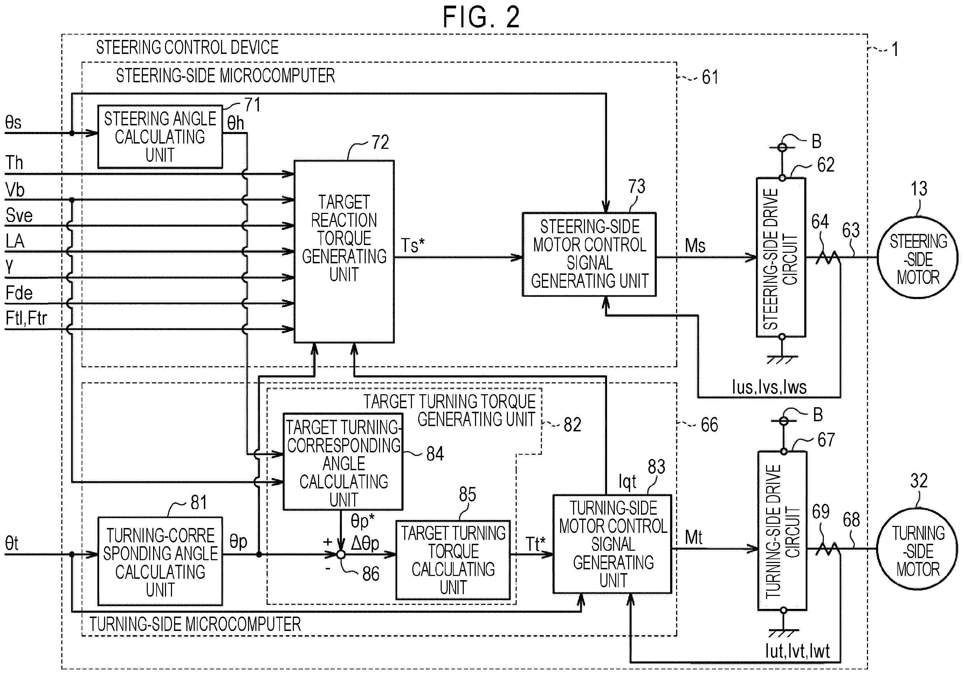

As illustrated in FIG. 2, the steering control device 1 includes a steering-side microcomputer 61 that outputs a steering-side motor control signal Ms and a steering-side drive circuit 62 that supplies drive electric power to the steering-side motor 13 based on the steering-side motor control signal Ms. Current sensors 64 provided in connection lines 63 between the steering-side drive circuit 62 and phase motor coils of the steering-side motor 13 are connected to the steering-side microcomputer 61. The current sensors 64 detect phase current values Ius, Ivs, and Iws of the steering-side motor 13 which flow in the connection lines 63. In FIG. 2, for the purpose of convenience of description, one of each of the phase connection lines 63 and the phase current sensors 64 is collectively illustrated.

The steering control device 1 includes a turning-side microcomputer 66 that outputs a turning-side motor control signal Mt and a turning-side drive circuit 67 that supplies drive electric power to the turning-side motor 32 based on the turning-side motor control signal Mt. Current sensors 69 which are provided in connection lines 68 between the turning-side drive circuit 67 and phase motor coils of the turning-side motor 32 are connected to the turning-side microcomputer 66. The current sensors 69 detect phase current values Iut, Ivt, and Iwt of the turning-side motor 32 which flow in the connection lines 68. In FIG. 2, for the purpose of convenience of description, one of each of the phase connection lines 68 and the phase current sensors 69 is collectively illustrated.

For example, a known PWM inverter including a plurality of switching elements such as FETs is employed by the steering-side drive circuit 62 and the turning-side drive circuit 67. The steering-side motor control signal Ms and the turning-side motor control signal Mt are gate-on/off signals for prescribing ON/OFF states of the switching elements.

When the steering-side motor control signal Ms is output to the steering-side drive circuit 62, drive electric power from an onboard power source B is supplied to the steering-side motor 13. In this way, the steering control device 1 controls a motor torque which is generated by the steering-side motor 13 by supplying drive electric power to the steering-side motor 13. When the turning-side motor control signal Mt is output to the turning-side drive circuit 67, drive electric power from the onboard power source B is supplied to the turning-side motor 32. In this way, the steering control device 1 controls a motor torque which is generated by the turning-side motor 32 by supplying drive electric power to the turning-side motor 32.

The configuration of the steering-side microcomputer 61 will be described below. The steering-side microcomputer 61 outputs the steering-side motor control signal Ms by performing operation processes indicated by the following control blocks at intervals of a predetermined operation cycle. The steering torque Th, the vehicle speed Vb, the vehicle speed state signal Sve, the rotation angle θs, the lateral acceleration LA, the yaw rate γ, the axial force detection value Fde, the tire forces Ftl and Ftr, the phase current values lus, lvs, and lws, a turning-corresponding angle θp which is a rotation angle of the pinion shaft 21 and which will be described later, and a q-axis current value lqt which is a drive current of the turning-side motor 32 are input to the steering-side microcomputer 61. Then, the steering-side microcomputer 61 outputs the steering-side motor control signal Ms based on these state quantities.

Specifically, the steering-side microcomputer 61 includes a steering angle calculating unit 71 that calculates a steering angle θh of the steering wheel 3, a target reaction torque generating unit 72 that generates a target reaction torque Ts* which is a target value of a steering reaction force, and a steering-side motor control signal generating unit 73 that generates the steering-side motor control signal Ms.

The rotation angle θs of the steering-side motor 13 is input to the steering angle calculating unit 71. The steering angle calculating unit 71 calculates a total angle, for example, by counting the number of rotations of the steering-side motor 13 from a steering midpoint and totaling the rotation angle θs with the steering midpoint as an origin. The steering midpoint is the steering angle θh when the steering wheel 3 is positioned at the center of a steerable range. The steering angle calculating unit 71 calculates the steering angle θh by multiplying a conversion factor based on a rotation speed proportion of the steering-side reduction gear 14 by the total angle. For example, the steering angle θh is calculated as a positive value when it is an angle on the right side of the steering midpoint and is calculated as a negative value when it is an angle on the left side of the steering midpoint. The calculated steering angle θh is output to the turning-side microcomputer 66.

The steering torque Th, the vehicle speed Vb, the vehicle speed state signal Sve, the lateral acceleration LA, the yaw rate γ, the axial force detection value Fde, the tire forces Ftl and Ftr, the turning-corresponding angle θp, and the q-axis current value lqt are input to the target reaction torque generating unit 72. As will be described later, the target reaction torque generating unit 72 generates the target reaction torque Ts* based on the state quantities and outputs the generated target reaction torque Ts* to the steering-side motor control signal generating unit 73. The target reaction torque Ts* corresponds to a target torque of the steering-side motor 13, and the target reaction torque generating unit 72 corresponds to a target torque generating unit.

In addition to the target reaction torque Ts*, the rotation angle θs and the phase current values lus, lvs, and lws are input to the steering-side motor control signal generating unit 73. The steering-side motor control signal generating unit 73 calculates a d-axis target current value lds* on a d axis and a q-axis target current value lqs* on a q axis in a d/q coordinate system based on the target reaction torque Ts*. The d-axis target current value lds* represents a target current value on the d axis. The q-axis target current value lqs* represents a target current value on the q axis.

Specifically, the steering-side motor control signal generating unit 73 calculates the q-axis target current value lqs* such that the absolute value thereof becomes larger as the absolute value of the target reaction torque Ts* becomes larger. In this embodiment, the d-axis target current value lds* on the d axis is basically set to zero.

The steering-side motor control signal generating unit 73 generates the steering-side motor control signal Ms which is output to the steering-side drive circuit 62 by performing a current feedback operation in the d/q coordinate system. The steering-side motor control signal generating unit 73 performs a PID control operation as an example of the current feedback operation. The word "feedback" may be replaced with "F/B" below.

Specifically, the steering-side motor control signal generating unit 73 calculates the d-axis current value lds and the q-axis current value lqs which are actual current values of the steering-side motor 13 in the d/q coordinate system by mapping the phase current values lus, lvs, and lws onto the d/q coordinates based on the rotation angle θs. The steering-side motor control signal generating unit 73 calculates a target voltage value based on current differences on the d axis and the q axis such that the d-axis current value lds conforms to the d-axis target current value lds* and the q-axis current value lqs conforms to the q-axis target current value lqs*. The steering-side motor control signal generating unit 73 generates the steering-side motor control signal Ms having a duty ratio based on the target voltage value.

The calculated steering-side motor control signal Ms is output to the steering-side drive circuit 62. Accordingly, drive electric power corresponding to the steering-side motor control signal Ms is supplied from the steering-side drive circuit 62 to the steering-side motor 13. The steering-side motor 13 applies a motor torque indicated by the target reaction torque Ts* as a steering reaction force to the steering wheel 3.

The configuration of the turning-side microcomputer 66 will be described below. The turning-side microcomputer 66 outputs the turning-side motor control signal Mt by performing operation processes indicated by the following control blocks at intervals of a predetermined operation cycle. The vehicle speed Vb, the rotation angle θt, the steering angle θh, and the phase current values lut, lvt, and lwt of the turning-side motor 32 are input to the turning-side microcomputer 66. Then, the turning-side microcomputer 66 generates the turning-side motor control signal Mt based on the state quantities and outputs the generated turning-side motor control signal Mt.

Specifically, the turning-side microcomputer 66 includes a turning-corresponding angle calculating unit 81 that calculates a turning-corresponding angle $\theta p$, a target turning torque generating unit 82 that generates a target turning torque Tt* which is a target value of the turning force, and a turning-side motor control signal generating unit 83 that generates the turning-side motor control signal Mt.

The rotation angle $\theta t$ of the turning-side motor 32 is input to the turning-corresponding angle calculating unit 81. The turning-corresponding angle calculating unit 81 calculates a total angle, for example, by counting the number of rotations of the turning-side motor 32 with respect to a turning-corresponding angle midpoint as an origin and totaling the rotation angle $\theta t$. The turning-corresponding angle midpoint is a rotation angle of the pinion shaft 21 when the vehicle travels straight. The turning-corresponding angle calculating unit 81 calculates the turning-corresponding angle $\theta p$ by multiplying a conversion factor based on a reduction ratio of the transmission mechanism 33, a lead of the conversion mechanism 34, and a rotation speed proportion of the rack and pinion mechanism 24 by the total angle. That is, the turning-corresponding angle $\theta p$ corresponds to a pinion angle which is a rotation angle of the pinion shaft 21. The calculated turning-corresponding angle $\theta p$ is output to the target reaction torque generating unit 72 and the target turning torque generating unit 82.

The vehicle speed Vb, the steering angle $\theta h$, and the turning-corresponding angle $\theta p$ are input to the target turning torque generating unit 82. The target turning torque generating unit 82 includes a target turning-corresponding angle calculating unit 84 that calculates a target turning-corresponding angle $\theta p^*$ which is a target value of the turning-corresponding angle $\theta p$ and a target turning torque calculating unit 85 that calculates a target turning torque Tt*.

Specifically, the vehicle speed Vb and the steering angle $\theta h$ are input to the target turning-corresponding angle calculating unit 84. The target turning-corresponding angle calculating unit 84 calculates the target turning-corresponding angle $\theta p^*$ based on the vehicle speed Vb and the steering angle $\theta h$. For example, the target turning-corresponding angle calculating unit 84 calculates the target turning-corresponding angle $\theta p^*$ by dividing the steering angle $\theta h$ by a transmission ratio which changes depending on the steering angle $\theta h$ and the vehicle speed Vb. That is, the steering control device 1 according to this embodiment changes a steering angle ratio which is a ratio of the turning-corresponding angle $\theta p$ to the steering angle $\theta h$.

An angle difference $\Delta\theta p$ which is acquired from a subtractor 86 by subtracting the turning-corresponding angle $\theta p$ from the target turning-corresponding angle $\theta p^*$ is input to the target turning torque calculating unit 85. The target turning torque calculating unit 85 calculates the target turning torque Tt* by performing an angle F/B operation of causing the turning-corresponding angle $\theta p$ to conform to the target turning-corresponding angle $\theta p^*$. The target turning torque calculating unit 85 performs a PID control operation as an example of the angle F/B operation. The calculated target turning torque Tt* is output to the turning-side motor control signal generating unit 83.

In addition to the target turning torque Tt*, the rotation angle $\theta t$ and the phase current values Iut, Ivt, and Iwt are input to the turning-side motor control signal generating unit 83. The turning-side motor control signal generating unit 83 calculates the d-axis target current value Idt* on the d axis and the q-axis target current value Iqt* on the q axis in the d/q coordinate system based on the target turning torque Tt*. Specifically, the turning-side motor control signal generating unit 83 calculates the q-axis target current value Iqt* such that the absolute value thereof increases as the absolute value of the target turning torque Tt* increases. In this embodiment, the d-axis target current value Idt* on the d axis is basically set to zero. Similarly to the steering-side motor control signal generating unit 73, the turning-side motor control signal generating unit 83 generates the turning-side motor control signal Mt which is output to the turning-side drive circuit 67 by performing current F/B control in the d/q coordinate system. The q-axis current value Iqt which is calculated in the process of generating the turning-side motor control signal Mt is output to the target reaction torque generating unit 72.

The calculated turning-side motor control signal Mt is output to the turning-side drive circuit 67. Accordingly, drive electric power corresponding to the turning-side motor control signal Mt is supplied to the turning-side motor 32 from the turning-side drive circuit 67. Then, the turning-side motor 32 applies a motor torque indicated by the target turning torque Tt* as a turning force to the turning wheels 5.

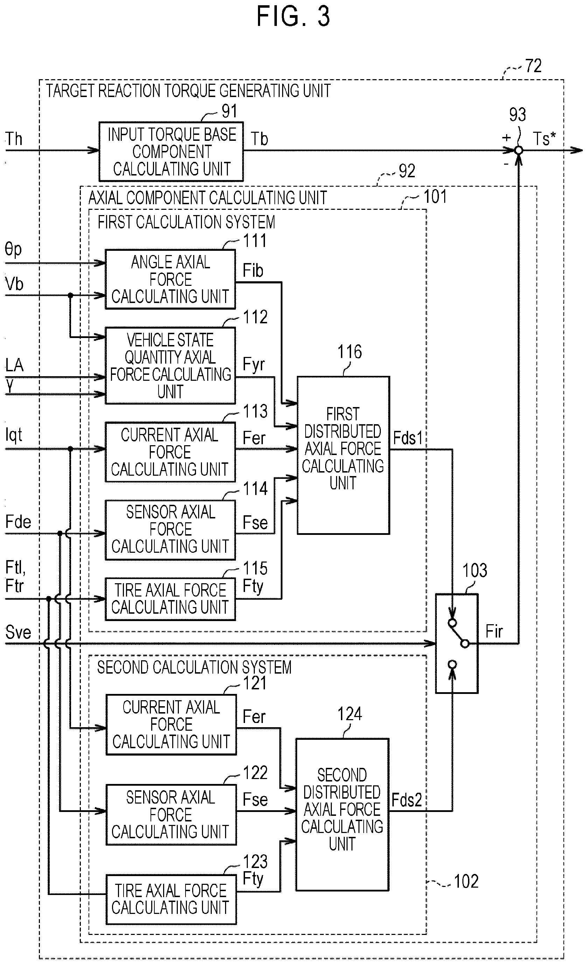

The configuration of the target reaction torque generating unit 72 will be described below. As illustrated in FIG. 3, the target reaction torque generating unit 72 includes an input torque base component calculating unit 91 that calculates an input torque base component Tb, an axial component calculating unit 92 that calculates an axial component Fir, and a subtractor 93 that is a target torque calculating unit. The input torque base component Tb is a force for rotating the steering wheel 3 in a driver's steering direction. The axial component Fir is a force against rotation of the steering wheel 3 which is steered by a driver, that is, an axial force which acts on the rack shaft 22 from the turning wheels 5.

Specifically, the steering torque Th is input to the input torque base component calculating unit 91. The input torque base component calculating unit 91 calculates the input torque base component Tb such that the absolute value thereof increases as the absolute value of the steering torque Th increases. The calculated input torque base component Tb is output to the subtractor 93.

The q-axis current value Iqt of the turning-side motor 32, the turning-corresponding angle $\theta p$, the vehicle speed

Vb, the vehicle speed state signal Sve, the lateral acceleration LA, the yaw rate $\gamma$, the axial force detection value Fde, and the tire forces Ftl and Ftr are input to the axial component calculating unit 92. The axial component calculating unit 92 calculates an axial component Fir corresponding to an axial force acting on the rack shaft 22 based on the state quantities as will be described later. The axial component Fir corresponds to a calculational axial force which is obtained by estimating the axial force acting on the rack shaft 22. The calculated axial component Fir is output to the subtractor 93.

The subtractor 93 calculates a target reaction torque Ts* by subtracting the axial component Fir from the input torque base component Tb. The calculated target reaction torque Ts* is output to the steering-side motor control signal generating unit 73.

As described above, the target reaction torque generating unit 72 calculates the target reaction torque Ts* based on the axial component Fir which is a calculational axial force. Accordingly, a steering reaction force which is applied from the steering-side motor 13 is basically a force against a driver's steering, but may serve as a force for assisting with a driver's steering depending on a difference between the calculational axial force and the actual axial force acting on the rack shaft 22.

The axial component calculating unit 92 will be described below. The axial component calculating unit 92 includes a first calculation system 101, a second calculation system 102, and an output switching unit 103.

The first calculation system 101 calculates a first distributed axial force Fds1 which is a vehicle-speed-based axial force which is calculated based on state quantities including the vehicle speed Vb. The second calculation system 102 calculates a second distributed axial force Fds2 which is an other-state-quantity-based axial force which is calculated based on a state quantity other than the vehicle speed Vb. The output switching unit 103 switches a valid calculation system between the first calculation system 101 and the second calculation system 102 based on the vehicle speed state signal Sve. The axial component calculating unit 92 outputs the first distributed axial force Fds1 as the axial component Fir by validating the first calculation system 101 when the state of the vehicle speed Vb is normal, and outputs the second distributed axial force Fds2 as the axial component Fir by validating the second calculation system 102 when the state of the vehicle speed Vb is abnormal.

Specifically, the first calculation system 101 includes an angle axial force calculating unit 111 that calculates an angle axial force Fib, a vehicle state quantity axial force calculating unit 112 that calculates a vehicle state quantity axial force Fyr, a current axial force calculating unit 113 that calculates a current axial force Fer, a sensor axial force calculating unit 114 that calculates a sensor axial force Fse, and a tire axial force calculating unit 115 that calculates a tire axial force Fty. The dimensions of the angle axial force Fib, the vehicle state quantity axial force Fyr, the current axial force Fer, the sensor axial force Fse, and the tire axial force Fty are, for example, a torque (N·m) around the pinion shaft. The first calculation system 101 includes a first distributed axial force calculating unit 116 that calculates the first distributed axial force Fds1 by summing the angle axial force Fib, the vehicle state quantity axial force Fyr, the current axial force Fer, the sensor axial force Fse, and the tire axial force Fty at predetermined distribution proportions which are individually set. That is, the first axial force group includes the angle axial force Fib, the vehicle state quantity axial force Fyr, the current axial force Fer, the sensor axial force Fse, and the tire axial force Fty.

The turning-corresponding angle θp and the vehicle speed Vb are input to the angle axial force calculating unit 111. The angle axial force calculating unit 111 calculates the angle axial force Fib based on the turning-corresponding angle θp and the vehicle speed Vb. The angle axial force Fib is an ideal value of an axial force in a preset model. Accordingly, the angle axial force Fib does not include road surface information such as fine unevenness not affecting behavior in the lateral direction of the vehicle or a stepped portion affecting behavior in the lateral direction of the vehicle.

Specifically, the angle axial force calculating unit 111 calculates the angle axial force Fib such that the absolute value thereof increases as the absolute value of the turning-corresponding angle θp increases. The angle axial force calculating unit 111 calculates the angle axial force Fib such that the absolute value thereof increases as the vehicle speed Vb increases. That is, the angle axial force Fib is a calculational axial force that is calculated based on the vehicle speed Vb. The calculated angle axial force Fib is output to a first distributed axial force calculating unit 116.

The vehicle speed Vb, the yaw rate $\gamma$, and the lateral acceleration LA are input to the vehicle state quantity axial force calculating unit 112. The vehicle state quantity axial force calculating unit 112 calculates a lateral force Fy which is acquired by inputting the yaw rate $\gamma$ and the lateral acceleration LA to the following Expression (1) as the vehicle state quantity axial force Fyr. The vehicle state quantity axial force Fyr is an estimated value which is acquired by considering the axial force acting on the rack shaft 22 via the turning wheels 5 as being approximate to the lateral force Fy acting on the rack shaft 22. The vehicle state quantity axial force Fyr does not include road surface information not causing change of behavior in the lateral direction of the vehicle and includes road surface information that can be transmitted through change of the behavior in the lateral direction of the vehicle.

$$\mathrm{Fy} = \mathrm{Kla} \times \mathrm{LA} + \mathrm{K}\gamma \times \gamma' \qquad \qquad \ldots (1)$$

Here, "$\gamma'$" is a differential value of the yaw rate $\gamma$ and "Kla" and "Ky" are coefficients which are set in advance by experiment or the like. The coefficients Kla and K$\gamma$ are set to change according to the vehicle speed Vb. That is, the vehicle state quantity axial force Fyr is a calculational axial force which is calculated based on the vehicle speed Vb. The calculated vehicle state quantity axial force Fyr is output to the first distributed axial force calculating unit 116.

The q-axis current value Iqt of the turning-side motor 32 is input to the current axial force calculating unit 113. The current axial force calculating unit 113 calculates the axial force acting on the rack shaft 22 via the turning wheels 5 based on the q-axis current value Iqt. The current axial force Fer is an estimated value of the axial force acting on the rack shaft 22. The current axial force Fer is a road-surface axial force including road surface information.

Specifically, the current axial force calculating unit 113 calculates the current axial force Fer based on the assumption that the torque applied to the rack shaft 22 by the turning-side motor 32 and the torque corresponding to a force applied to the turning wheels 5 from a road surface are balanced. The current axial force calculating unit 113 calculates the current axial force Fer such that the absolute value thereof increases as the absolute value of the q-axis current value Iqt increases. Since the current axial force Fer is calculated based on the balance between the torques, the current axial force Fer has an appropriate value corresponding to the axial force actually acting on the rack shaft 22 without considering the vehicle speed Vb. That is, the current axial force Fer is a calculational axial force that is calculated based on a state quantity other than the vehicle speed Vb. The calculated current axial force Fer is output to the first distributed axial force calculating unit 116.

The axial force detection value Fde is input to the sensor axial force calculating unit 114. The sensor axial force calculating unit 114 calculates a sensor axial force Fse by multiplying the axial force detection value Fde by a conversion factor based on a rotation speed ratio of the rack-and-pinion mechanism 24. Since the sensor axial force Fse is calculated based on the axial force detection value Fde which is a detection value of the axial force acting on the rack shaft 22, the sensor axial force Fse has an appropriate value corresponding to the axial force actually acting on the rack shaft 22 without considering the vehicle speed Vb. That is, the sensor axial force Fse is a calculational axial force that is calculated based on a state quantity other than the vehicle speed Vb. The calculated sensor axial force Fse is output to the first distributed axial force calculating unit 116.

The tire forces Ftl and Ftr are input to the tire axial force calculating unit 115. The tire axial force calculating unit 115 calculates an average value of the tire forces Ftl and Ftr. The tire axial force calculating unit 115 calculates a tire axial force Fty by multiplying the average value by the conversion factor based on the rotation speed ratio of the rack-and-pinion mechanism 24. Since the tire axial force Fty is calculated based on the tire forces Ftl and Ftr which are detection values of the force acting on the turning wheels 5, the tire axial force Fty has an appropriate value corresponding to the axial force actually acting on the rack shaft 22 without considering the vehicle speed Vb. That is, the tire axial force Fty is a calculational axial force that is calculated based on a state quantity other than the vehicle speed Vb. The calculated tire axial force Fty is output to the first distributed axial force calculating unit 116.

The angle axial force Fib, the vehicle state quantity axial force Fyr, the current axial force Fer, the sensor axial force Fse, and the tire axial force Fty are input to the first distributed axial force calculating unit 116. In the first distributed axial force calculating unit 116, an angle distribution gain Gib, a vehicle state quantity distribution gain Gyr, a current distribution gain Ger, a sensor distribution gain Gse, and a tire distribution gain Gty are set in advance based on results of experiment or the like. The angle distribution gain Gib represents a distribution proportion of the angle axial force Fib in the first distributed axial force Fds1. The vehicle state quantity distribution gain Gyr represents a distribution proportion of the vehicle state quantity axial force Fyr in the first distributed axial force Fds1. The current distribution gain Ger represents a distribution proportion of the current axial force Fer in the first distributed axial force Fds1. The sensor distribution gain Gse represents a distribution proportion of the sensor axial force Fse in the first distributed axial force Fds1. The tire distribution gain Gty represents a distribution proportion of the tire axial force Fty in the first distributed axial force Fds1.

The first distributed axial force calculating unit 116 calculates an angle axial force distribution value by multiplying the angle axial force Fib by the angle distribution gain Gib. The first distributed axial force calculating unit 116 calculates a vehicle state quantity axial force distribution value by multiplying the vehicle state quantity axial force Fyr by the vehicle state quantity distribution gain Gyr. The first distributed axial force calculating unit 116 calculates a current axial force distribution value by multiplying the current axial force Fer by the current distribution gain Ger. The first distributed axial force calculating unit 116 calculates a sensor axial force distribution value by multiplying the sensor axial force Fse by the sensor distribution gain Gse. The first distributed axial force calculating unit 116 calculates a tire axial force distribution value by multiplying the tire axial force Fty by the tire distribution gain Gty. The first distributed axial force calculating unit 116 calculates the first distributed axial force Fds1 by summing the distribution values. In this way, the first distributed axial force Fds1 includes the calculational axial forces which are calculated based on the vehicle speed Vb, that is, the angle axial force Fib and the vehicle state quantity axial force Fyr. The calculated first distributed axial force Fds1 is output to the output switching unit 103.

The second calculation system 102 includes a current axial force calculating unit 121 that calculates the current axial force Fer, a sensor axial force calculating unit 122 that calculates the sensor axial force Fse, and a tire axial force calculating unit 123 that calculates the tire axial force Fty. The second calculation system 102 includes a second distributed axial force calculating unit 124 that calculates the second distributed axial force Fds2 by summing the current axial force Fer, the sensor axial force Fse, and the tire axial force Fty at predetermined distribution proportions which are individually set. That is, the second axial force group includes the current axial force Fer, the sensor axial force Fse, and the tire axial force Fty.

The current axial force calculating unit 121 calculates the current axial force Fer in the same way as in the current axial force calculating unit 113 of the first calculation system 101. The sensor axial force calculating unit 122 calculates the sensor axial force Fse in the same way as in the sensor axial force calculating unit 114 of the first calculation system 101. The tire axial force calculating unit 123 calculates the tire axial force Fty in the same way as in the tire axial force calculating unit 115 of the first calculation system 101.

A current distribution gain Ger, a sensor distribution gain Gse, and a tire distribution gain Gty are set in the second distributed axial force calculating unit 124. The second distributed axial force calculating unit 124 calculates a current axial force distribution value, a sensor axial force distribution value, and a tire axial force distribution value in the same way as in the first distributed axial force calculating unit 116. The second distributed axial force calculating unit 124 calculates the second distributed axial force Fds2 by summing the distribution values. In this way, the second distributed axial force Fds2 does not include any calculational axial forces which are calculated based on the vehicle speed Vb. The calculated second distributed axial force Fds2 is output to the output switching unit 103.

In addition to the first distributed axial force Fds1 and the second distributed axial force Fds2, the vehicle speed state signal Sve is input to the output switching unit 103. When the vehicle speed state signal Sve indicates that the state of the vehicle speed Vb is normal, the output switching unit 103 outputs the first distributed axial force Fds1 as the axial component Fir to the subtractor 93 by validating the first calculation system 101. On the other hand, when the vehicle speed state signal Sve indicates that the state of the vehicle speed Vb is abnormal, the output switching unit 103 outputs the second distributed axial force Fds2 as the axial component Fir to the subtractor 93 by validating the second calculation system 102. That is, the output switching unit 103 switches a value serving as the axial component Fir from the value of the first distributed axial force Fds1 to the value of the second distributed axial force Fds2 when the state of the vehicle speed Vb becomes abnormal. Accordingly, when the state of the vehicle speed Vb is abnormal, the angle axial force Fib and the vehicle state quantity axial force Fyr which are calculated based on the vehicle speed Vb do not affect the axial component Fir.

Here, when the valid calculation system is switched from the first calculation system 101 to the second calculation system 102 because the state of the vehicle speed Vb changes from the normal state to the abnormal state, the output switching unit 103 according to this embodiment slowly changes the value of the axial component Fir from the value of the first distributed axial force Fds1 to the value of the second distributed axial force Fds2.

For example, the output switching unit 103 calculates a difference by subtracting the second distributed axial force Fds2 from the first distributed axial force Fds1 which is acquired in a calculation cycle in which the valid calculation system is switched from the first calculation system 101 to the second calculation system 102. The output switching unit 103 calculates a correction value such that the absolute value thereof decreases slowly based on the difference and a steering speed. The output switching unit 103 outputs a value obtained by adding the correction value to the second distributed axial force Fds2 as the axial component Fir. That is, when the correction value is zero, the value of the axial component Fir is equal to the value of the second distributed axial force Fds2.

Operations and advantages of this embodiment will be described below. (1) The axial component calculating unit 92 includes the first calculation system 101 that calculates the first distributed axial force Fds1 based on a state quantity including the vehicle speed Vb, the second calculation system 102 that calculates the second distributed axial force Fds2 based on a state quantity other than the vehicle speed Vb, and the output switching unit 103 that switches the valid calculation system. The output switching unit 103 outputs the first distributed axial force Fds1 as the axial component Fir by validating the first calculation system 101 when the state of the vehicle speed Vb is normal, and outputs the second distributed axial force Fds2 as the axial component Fir by validating the second calculation system 102 when the state of the vehicle speed Vb is abnormal. Accordingly, when the state of the vehicle speed Vb is abnormal, the second distributed axial force Fds2 which is not based on the vehicle speed Vb is output as the axial component Fir and the target reaction torque Ts* is calculated based on the axial component Fir. Accordingly, it is possible to prevent the target reaction torque Ts* from becoming different from an appropriate value corresponding to an axial force acting on the rack shaft 22.

(2) The axial component calculating unit 92 slowly changes the value of the axial component Fir from the value of the first distributed axial force Fds1 which is an axial force based on the value of the vehicle speed to the value of the second distributed axial force Fds2 which is an axial force based on another state quantity when the valid calculation system is switched from the first calculation system 101 to the second calculation system 102. Accordingly, in comparison with a case in which the value of the axial component Fir changes immediately from the value of the first distributed axial force Fds1 to the value of the second distributed axial force Fds2 when the state of the vehicle speed Vb becomes abnormal, it is possible to curb rapid change of the axial component Fir. Accordingly, it is possible to curb rapid change of the target reaction torque Ts* and to curb a decrease of a feeling of steering.

Second embodiment

A steering control device according to a second embodiment will be described below with reference to the drawings. For the purpose of convenience of description, the same elements will be referred to by the same reference signs as in the first embodiment and description thereof will be omitted.

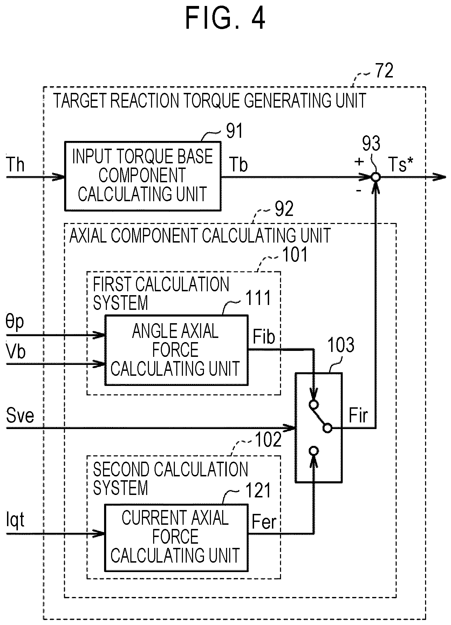

As illustrated in FIG. 4, the first calculation system 101 according to this embodiment includes only an angle axial force calculating unit 111. The angle axial force calculating unit 111 outputs a calculated angle axial force Fib to the output switching unit 103. That is, in this embodiment, the angle axial force Fib which is a single axial force corresponds to a vehicle-speed-based axial force.

The second calculation system 102 includes only a current axial force calculating unit 121. The current axial force calculating unit 121 outputs a calculated current axial force Fer to the output switching unit 103. That is, in this embodiment, the current axial force Fer which is a single axial force corresponds to an other-state-quantity-based axial force.

When a vehicle speed state signal Sve indicates that the state of the vehicle speed Vb is normal, the output switching unit 103 outputs the angle axial force Fib as the axial component Fir by validating the first calculation system 101. On the other hand, when the vehicle speed state signal Sve indicates that the state of the vehicle speed Vb is abnormal, the output switching unit 103 outputs the current axial force Fer as the axial component Fir by validating the second calculation system 102. Similarly to the first embodiment, the output switching unit 103 slowly changes the value of the axial component Fir from the value of the angle axial force Fib to the current axial force Fer when the valid calculation system is switched from the first calculation system 101 to the second calculation system 102.

According to this embodiment, the same operations and advantages as the operations and advantages of (1) and (2) in the first embodiment are achieved. The embodiments can be modified as follows. The aforementioned embodiments and the following modified examples can be combined unless technical conflictions arise.

In the aforementioned embodiments, the average value of the vehicle wheel speeds Vfl, Vfr, Vrl, and Vrr is used as the vehicle speed Vb, but the invention is not limited thereto and, for example, an average of the second and third highest wheel speeds out of the vehicle wheel speeds Vfl, Vfr, Vrl, and Vrr may be used and the method of calculating the vehicle speed Vb can be appropriately modified. Instead of using the wheel speeds, for example, a value obtained by integrating a longitudinal acceleration of the vehicle may be used as the vehicle speed Vb. For example, positioning signals from global positioning system (GPS) satellites may be received and an estimated vehicle speed which is estimated from change in position of the vehicle per unit time based on the received positioning signals may be used as the vehicle speed Vb.

In the aforementioned embodiments, the steering control device 1 may calculate the vehicle speed Vb based on the vehicle wheel speeds Vfl, Vfr, Vrl, and Vrr. In the aforementioned embodiments, the tire axial force Fty is calculated based on the average value of the tire forces Ftl and Ftr, but the invention is not limited thereto and, for example, the tire axial force Fty may be calculated based on only the larger or the smaller of the tire forces Ftl and Ftr.

In the aforementioned embodiments, the input torque base component calculating unit 91 may calculate the input torque base component Tb, for example, based on the steering torque Th and the vehicle speed Vb. In this case, for example, the input torque base component calculating unit 91 calculates the input torque base component Tb such that the absolute value thereof increases as the vehicle speed Vb decreases. When the vehicle speed state signal Sve indicating that the vehicle speed Vb is abnormal is input, it is preferable that the input torque base component calculating unit 91 determine that the vehicle speed Vb is a predetermined vehicle speed which is set in advance and calculate the input torque base component Tb based on the steering torque Th. The predetermined vehicle speed is set to a speed at which the input torque base component Tb does not have an excessively large value or an excessively small value with change of the steering torque Th.

In the first embodiment, the first axial force group includes the angle axial force Fib, the vehicle state quantity axial force Fyr, the current axial force Fer, the sensor axial force Fse, and the tire axial force Fty, but the invention is not limited thereto. The first axial force group may include a plurality of calculational axial forces including at least a calculation axial force which is calculated based on the vehicle speed Vb. Accordingly, the first axial force group may include, for example, the angle axial force Fib and the current axial force Fer. In other words, the first distributed axial force Fds1 may be calculated by summing the angle axial force Fib and the current axial force Fer at predetermined distribution proportions which are individually set.

In the first embodiment, the second axial force group includes the current axial force Fer, the sensor axial force Fse, and the tire axial force Fty, but the invention is not limited thereto. The second axial force group may not include an axial force which is calculated based on the vehicle speed Vb and may include a plurality of calculational axial forces which is calculated based on a state quantity other than the vehicle speed Vb. Accordingly, the second axial force group may include, for example, the current axial force Fer and the sensor axial force Fse. In other words, the second distributed axial force Fds2 may be calculated by summing the current axial force Fer and the sensor axial force Fse at predetermined distribution proportions which are individually set.

In the first embodiment, the first calculation system 101 may not calculate the first distributed axial force Fds1 but may calculate a single calculational axial force which is calculated based on the vehicle speed Vb, for example, the angle axial force Fib or the vehicle state quantity axial force Fyr. The second calculation system 102 may not calculate the second distributed axial force Fds2 but may calculate a single calculational axial force which is calculated based on a state quantity other than the vehicle speed Vb, for example, one of the current axial force Fer, the sensor axial force Fse, and the tire axial force Fty. That is, the value of the axial component Fir may be switched to a distributed axial force or a single axial force according to the state of the vehicle speed Vb.

In the second embodiment, the first calculation system 101 includes only the angle axial force calculating unit 111, but the invention is not limited thereto and, for example, the first calculation system 101 may include only the vehicle state quantity axial force calculating unit 112. The second calculation system 102 may include only the sensor axial force calculating unit 122 or only the tire axial force calculating unit 123.

In the aforementioned embodiments, a calculation mode in in which the value of the axial component Fir is slowly changed from the value of the first distributed axial force Fds1 to the second distributed axial force Fds2 can be appropriately modified. For example, a compensation value which is added to the second distributed axial force Fds2 may be slowly decreased with the elapse of time after the state of the vehicle speed Vb changes from the normal state to the abnormal state.

In the first embodiment, the output switching unit 103 may immediately change the value of the axial component Fir from the value of the first distributed axial force Fds1 to the value of the second distributed axial force Fds2 when the valid calculation system is switched from the first calculation system 101 to the second calculation system 102. In the second embodiment, similarly, the output switching unit 103 may immediately change the value of the axial component Fir from the value of the angle axial force Fib to the value of the current axial force Fer when the valid calculation system is switched from the first calculation system 101 to the second calculation system 102.

In the aforementioned embodiments, the axial component calculating unit 92 may calculate a value obtained by adding another axial force to the value output from the output switching unit 103 as the axial component Fir. For example, an end axial force for restricting further turning steering when the absolute value of the steering angle of the steering wheel 3 approaches a steering angle threshold value can be employed as such another axial force.

In the aforementioned embodiments, the current axial force Fer is calculated based on the q-axis current value Iqt, but the invention is not limited thereto and, for example, the current axial force Fer may be calculated based on the q-axis target current value Iqt*. In the aforementioned embodiments, the angle axial force Fib is calculated based on the turning-corresponding angle $\theta p$, but the invention is not limited thereto and, for example, the angle axial force Fib may be calculated based on the target turning-corresponding angle $\theta p^*$ or the steering angle $\theta h$ or may be calculated using another method such as considering another parameter such as the steering torque Th.

In the aforementioned embodiments, the steering system 2 which is to be controlled employs a linkless structure in which transmission of power between the steering unit 4 and the turning unit 6 is cut off, but the invention is not limited thereto and a steering system with a structure in which transmission of power between the steering unit 4 and the turning unit 6 is cut off by a clutch may be controlled.

In the aforementioned embodiments, a steer-by-wire steering system 2 is controlled, but the invention is not limited thereto. For example, an electric power steering system that includes a steering mechanism for turning the turning wheels 5 based on an operation of the steering wheel 3 and applies a motor torque for assisting with the operation of the steering wheel 3 as an assist force may be controlled. In such a steering system, the steering torque Th which is required for steering of the steering wheel 3 is changed by the motor torque which is applied as an assist force. In this case, the steering control device calculates a target assist torque which is a target value of the assist force based on the axial component.

**Claims**

1. A steering control device (1) configured to control a steering system (2) that changes a steering torque which is required for steering of a steering wheel (3) using a motor torque which is applied from a motor, the steering control device (1) **characterized by** comprising:

   a target torque generating unit (72) configured to generate a target torque which is a target value of the motor torque; and
   a control signal generating unit (73) configured to generate a control signal for controlling the motor such that the motor torque based on the target torque is generated,
   wherein the target torque generating unit (72) includes an axial component calculating unit (92) configured to calculate an axial component corresponding to an axial force acting on a turning shaft (22) to which turning wheels (5) are connected and a target torque calculating unit (91) configured to calculate the target torque based on the axial component,

wherein the axial component calculating unit (92) includes a first calculation system (101) configured to calculate a vehicle-speed-based axial force based on a state quantity including a vehicle speed, a second calculation system (102) configured to calculate an other-state-quantity-based axial force based on a state quantity other than the vehicle speed, and an output switching unit (103) configured to switch a valid calculation system to the first calculation system (101) or the second calculation system (102), and

wherein the output switching unit (103) is configured to output the vehicle-speed-based axial force as the axial component by validating the first calculation system (101) when a state of the vehicle speed is normal and to output the other-state-quantity-based axial force as the axial component by validating the second calculation system (102) when the state of the vehicle speed is abnormal.

2. The steering control device (1) according to claim 1, **characterized in that** the axial component calculating unit (92) is configured to slowly change a value of the axial component from a value of the vehicle-speed-based axial force to a value of the other-state-quantity-based axial force when the valid calculation system is switched from the first calculation system (101) to the second calculation system (102).

3. The steering control device (1) according to claim 1 or 2, **characterized in that**:

the vehicle-speed-based axial force is a first distributed axial force which is calculated based on a first axial force group including a plurality of types of calculational axial forces;

the other-state-quantity-based axial force is a second distributed axial force which is calculated based on a second axial force group including a plurality of types of calculational axial forces;

the first axial force group includes at least one of an angle axial force which is calculated based on the vehicle speed and which does not include road surface information and a vehicle state quantity axial force which is calculated based on the vehicle speed and which includes road surface information which is able to be transmitted through a change of behavior in a lateral direction of a vehicle out of the road surface information; and

the second axial force group does not include a calculational axial force which is calculated based on the vehicle speed and includes a plurality of types of road-surface axial forces which is calculated based on a state quantity other than the vehicle speed and which includes the road surface information.

4. The steering control device (1) according to claim 1 or 2, **characterized in that**:

the vehicle-speed-based axial force is an angle axial force which is calculated based on the vehicle speed and which does not include road surface information or a vehicle state quantity axial force which is calculated based on the vehicle speed and which includes road surface information which is able to be transmitted through a change of behavior in a lateral direction of a vehicle out of the road surface information; and

the other-state-quantity-based axial force is a single road-surface axial force which is calculated based on a state quantity other than the vehicle speed and which includes the road surface information.

5. The steering control device (1) according to any one of claims 1 to 4, **characterized in that**:

the steering system (2) has a structure in which a power transmission path between a steering unit (4) to which the steering wheel (3) is connected and a turning unit (6) which turns the turning wheels (5) is cut off;

the motor is a steering-side motor (13) that applies the motor torque as a steering reaction force against steering input to the steering unit (4); and

the target torque generating unit (72) is configured to generate a target reaction torque which is a target value of the steering reaction force as the target torque.

FIG. 1

FIG. 2

# FIG. 3

# FIG. 4

# FIG. 5A

# FIG. 5B

Europäisches
Patentamt
European
Patent Office
Office européen
des brevets

# EUROPEAN SEARCH REPORT

Application Number

EP 21 19 8557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/130739 A1 (KODERA TAKASHI [JP]) 30 April 2020 (2020-04-30) * paragraph [0074] – paragraph [0075] * * paragraph [0078] – paragraph [0085]; figure 4 * | 1-5 | INV. B62D5/04 B62D6/00 |
| A | EP 2 772 410 A1 (NISSAN MOTOR [JP]) 3 September 2014 (2014-09-03) * figure 3 * & WO 2013/061567 A1 (NISSAN MOTOR [JP]) 2 May 2013 (2013-05-02) | 1 | |
| A | EP 3 053 807 A2 (JTEKT CORP [JP]) 10 August 2016 (2016-08-10) * figures 1,2 * & JP 2016 144974 A (JTEKT CORP) 12 August 2016 (2016-08-12) | 1 | |
| A | EP 3 705 383 A1 (JTEKT CORP [JP]; TOYOTA MOTOR CO LTD [JP]) 9 September 2020 (2020-09-09) * figures 3,4,5a,5b * | 1 | |

TECHNICAL FIELDS
SEARCHED (IPC)

B62D

The present search report has been drawn up for all claims

| Place of search | Date of completion of the search | Examiner |
|---|---|---|
| The Hague | 10 February 2022 | Van Prooijen, Tom |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 8557

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2022

| Patent document cited in search report | | | Publication date | Patent family member(s) | | | Publication date |
|---|---|---|---|---|---|---|---|
| US 2020130739 | A1 | | 30-04-2020 | CN | 111114626 | A | 08-05-2020 |
| | | | | EP | 3647162 | A1 | 06-05-2020 |
| | | | | US | 2020130739 | A1 | 30-04-2020 |
| EP 2772410 | A1 | | 03-09-2014 | CN | 103906672 | A | 02-07-2014 |
| | | | | EP | 2772410 | A1 | 03-09-2014 |
| | | | | JP | 5751338 | B2 | 22-07-2015 |
| | | | | JP | WO2013061567 | A1 | 02-04-2015 |
| | | | | US | 2014303850 | A1 | 09-10-2014 |
| | | | | WO | 2013061567 | A1 | 02-05-2013 |
| EP 3053807 | A2 | | 10-08-2016 | CN | 105857388 | A | 17-08-2016 |
| | | | | EP | 3053807 | A2 | 10-08-2016 |
| | | | | JP | 6439473 | B2 | 19-12-2018 |
| | | | | JP | 2016144974 | A | 12-08-2016 |
| | | | | US | 2016229446 | A1 | 11-08-2016 |
| EP 3705383 | A1 | | 09-09-2020 | CN | 111661143 | A | 15-09-2020 |
| | | | | EP | 3705383 | A1 | 09-09-2020 |
| | | | | JP | 2020142596 | A | 10-09-2020 |
| | | | | US | 2020283059 | A1 | 10-09-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013061567 A

- JP 2016144974 A